# EUROPEAN PATENT APPLICATION

(11) **EP 2 896 982 A2**
(43) Date of publication of application: **22.07.2015**
(21) Application number: 14200383.9
(22) Date of filing: 29.12.2014
(51) Int. Cl.: G02B 13/00, G02B 13/18

(54) **Imaging objective having five single lenses**

(30) Priority: 17.01.2014 TW 103101819
(71) Applicant: Ability Opto-Electronics Technology Co., Ltd., Taichung City 428 (TW)
(72) Inventor: Liao, Kuo-Yu, 437 Taichung City (TW)
(74) Representative: advotec.

(57) **Abstract**

Five-piece objective for capturing images comprising, in this order from the object to the image-plane (170), an aperture stop (100), an aspherical first lens (110) having an object-side surface (111) convex towards the object, an aspherical second lens (120) having an image-side surface (122) concave towards the image, an aspherical third lens (130) with positive refractive-power having an object-side surface (131) convex towards the object and an image-side surface (132), an aspherical fourth lens (140) having an object-side surface (141) concave towards the object and an image-side surface (142) convex towards the image and an aspherical fifth lens (150), wherein two of the objective's aspherical surfaces have an inflection point and wherein the image-side surface (132) of the third lens (130) satisfies the inequality S6H/AD < 0.1 where S6H denotes the axial length, measured along the optical axis, between the vertex and the point located at the height of the aperture stop and AD denotes the diameter of the aperture stop.

## Description

### CROSS-REFERENCE TO RELATED APPLICATION

This application claims priority from Taiwan Patent Application No. 103101819, filed on January 17, 2014, in the Taiwan Intellectual Property Office, the content of which are hereby incorporated by reference in their entirety for all purposes.

### BACKGROUND OF THE INVENTION

### 1. Field of the Invention

The following description relates to a five-piece lens set for capturing images, and more particularly to a miniaturized optical lens set which can be applied to electronic products.

### 2. Description of the Related Art

Presently, as the electronic products with images capturing is burgeoning, the needs for the miniaturized photograph lens increases gradually. Generally, the regular photograph lenses are nothing more than charge coupled device or complementary metal-oxide semiconductor sensor (CMOS) sensor; however, as the rapid development of the technique of semiconductor process, the pixel size of sensing element becomes smaller, and the miniaturized photograph lens focuses on the field of the high pixel. As a result, the demands for the image-sensing quality increase gradually as well.

In terms of the design of various miniaturized five-piece optical lens for capturing images, the prior art uses the combination of different positive or negative refractive power, such as the arrangement of four-piece lens with negative refractive power and five-piece lens with negative refractive power to increase the rear focal length and the total length of optical images capturing, but it results that the total length of the optical lens set is hard to be shortened.

As a result, how to reduce the total length of optical lens for capturing image and effectively combine sets of lenses so as to further promote the imaging quality has become an extremely crucial issue.

### SUMMARY OF THE INVENTION

The aspect of embodiment of the present invention aims to a five-piece lens set for capturing image which uses combination of refractive power, convex and concave surfaces of the five-piece lens set to further shorten total length of the five-piece lens set for capturing image so as to increase imaging quality and be applied to the minimized electronic products.

According to the aforementioned purpose, the present disclosure may provide a five-piece lens set for capturing images including an aperture stop; a five-piece optical lens for capturing images, in order from an object side to an image side, the optical lens along an optical axis including a first lens element, a second lens element, a third lens element, a fourth lens element and a fifth lens element. The first lens element may have a convex object-side surface near the optical axis, and at least one of the object-side and the image-side surfaces of the first lens element being aspheric; the second lens element may have a concave image-side surface near the optical axis, and at least one of the object-side and the image-side surfaces of the second lens element being aspheric; the third lens element with positive refractive power may have a convex object-side surface near the optical axis, both the object-side and the image-side surfaces of the third lens element may be aspheric, the max height difference centered by the optical axis and smaller than a diameter range of the aperture stop near the image-side surface may be S6H, diameter of the aperture stop being AD, and the following relationship may be satisfied: S6H/AD<0.1; the fourth lens element may have a concave object-side surface and a convex image-side surface near the optical axis, and at least one of the object-side and the image-side surfaces of the fourth lens element may be aspheric; both the object-side and the image-side surfaces of the fifth lens element near the optical surface may be aspheric; and an image-plane for imaging an object may to be imaged. At least two of the aspheric surfaces may have one inflection point.

In accordance with the aforementioned purpose, the present disclosure further may provide a five-piece lens set for capturing images including an aperture stop; a five-piece optical lens for capturing images, in order from an object side to an image side, the optical lens along an optical axis including a first lens element, a second lens element, a third lens element, a fourth lens element and a fifth lens element. The first lens element may have a convex object-side surface near the optical axis, and at least one of the object-side and the image-side surfaces of the first lens element may be aspheric; the second lens element may have a concave image-side surface near the optical axis, and at least one of the object-side and the image-side surfaces of the second lens element may be aspheric; the third lens element with positive refractive power may have a convex object-side surface near the optical axis, both the object-side and the image-side surfaces of the third lens element may be aspheric, the max height difference centered by the optical axis and smaller than a diameter range of the aperture stop near the image-side surface may have S6H, diameter of the aperture stop being AD, and the following relationship may be satisfied: S6H/AD<0.1; the fourth lens element may have a concave object-side surface and a convex image-side surface near the optical axis, and at least one of the object-side and the image-side surfaces of the fourth lens element may be aspheric; both the object-side and the image-side surfaces of the fifth lens element may be aspheric; and an image-plane for imaging an object may to be imaged.

In accordance with the aforementioned purpose, the present disclosure may further provide a five-piece lens set for capturing images including an aperture stop; a five-piece optical lens for capturing images, in order from an object side to an image side, the optical lens along an optical axis including a first lens element, a second lens element, a third lens element, a fourth lens element and a fifth lens element. The first lens element may have a convex object-side surface near the optical axis, and at least one of the object-side and the image-side surfaces of the first lens element may be aspheric; the second lens element having a concave image-side surface near the optical axis, and at least one of the object-side and the image-side surfaces of the second lens element may be aspheric; the third lens element with positive refractive power may have a convex object-side surface near the optical axis, both the object-side and the image-side surfaces of the third lens element may be aspheric, and the max height difference centered by the optical axis and smaller than a diameter range of the aperture stop near the image-side surface may be smaller than 0.15mm; the fourth lens element may have a concave object-side surface and a convex image-side surface near the optical axis, and at least one of the object-side and the image-side surfaces of the fourth lens element may be aspheric; both the object-side and the image-side surfaces of the fifth lens element may be aspheric; and an image-plane for imaging an object may to be imaged. A distance along the optical axis from the object-side surface of the first lens element to the image-side surface of the fifth lens element may be FL, a distance along the optical axis from the aperture stop to the image-side surface of the fifth lens element may be STL, and the following relationship may be satisfied: 0.7<STL/FL<1.1.

### BRIEF DESCRIPTION OF THE DRAWINGS

Hereinafter, embodiments of the present invention will be described in detail with reference to the accompanying drawings so that those skilled in the art to which the present invention pertains can realize the present invention, wherein:
FIG. 1 is a schematic diagram of a parameter S6H of a five-piece lens set for capturing images according to the present invention.
FIG. 2A is a schematic diagram of the first embodiment of a five-piece lens set for capturing images according to the present invention.
FIG. 2B is astigmatic field curves and a distortion curve of the first embodiment according to the present invention.
FIG. 2C is longitudinal spherical aberration curves of the first embodiment according to the present invention.
FIG. 3A is a schematic diagram of the second embodiment of a five-piece lens set for capturing images according to the present invention.
FIG. 3B is astigmatic field curves and a distortion curve of the second embodiment according to the present invention.
FIG. 3C is longitudinal spherical aberration curves of the second embodiment according to the present invention.
FIG. 4A is a schematic diagram of the third embodiment of a five-piece lens set for capturing images according to the present invention.
FIG. 4B is astigmatic field curves and a distortion curve of the third embodiment according to the present invention.
FIG. 4C is longitudinal spherical aberration curves of the third embodiment according to the present invention.
FIG. 5A is a schematic diagram of the fourth embodiment of a five-piece lens set for capturing images according to the present invention.
FIG. 5B is astigmatic field curves and a distortion curve of the fourth embodiment according to the present invention.
FIG. 5C is longitudinal spherical aberration curves of the fourth embodiment according to the present invention.
FIG. 6A is a schematic diagram of the fifth embodiment of a five-piece lens set for capturing images according to the present invention.
FIG. 6B is astigmatic field curves and a distortion curve of the fifth embodiment according to the present invention.
FIG. 6C is longitudinal spherical aberration curves of the fifth embodiment according to the present invention.
FIG. 7A is a schematic diagram of the sixth embodiment of a five-piece lens set for capturing images according to the present invention.
FIG. 7B is astigmatic field curves and a distortion curve of the sixth embodiment according to the present invention.
FIG. 7C is longitudinal spherical aberration curves of the sixth embodiment according to the present invention.
FIG. 8A is a schematic diagram of the seventh embodiment of a five-piece lens set for capturing images according to the present invention.
FIG. 8B is astigmatic field curves and a distortion curve of the seventh embodiment according to the present invention.
FIG. 8C is longitudinal spherical aberration curves of the seventh embodiment according to the present invention.

### DETAILED DESCRIPTION OF THE PREFERRED EMBODIMENTS

As used herein, the term "and/or" includes any and all combinations of one or more of the associated listed items. Expressions such as "at least one of," when preceding a list of elements, modify the entire list of elements and do not modify the individual elements of the list.

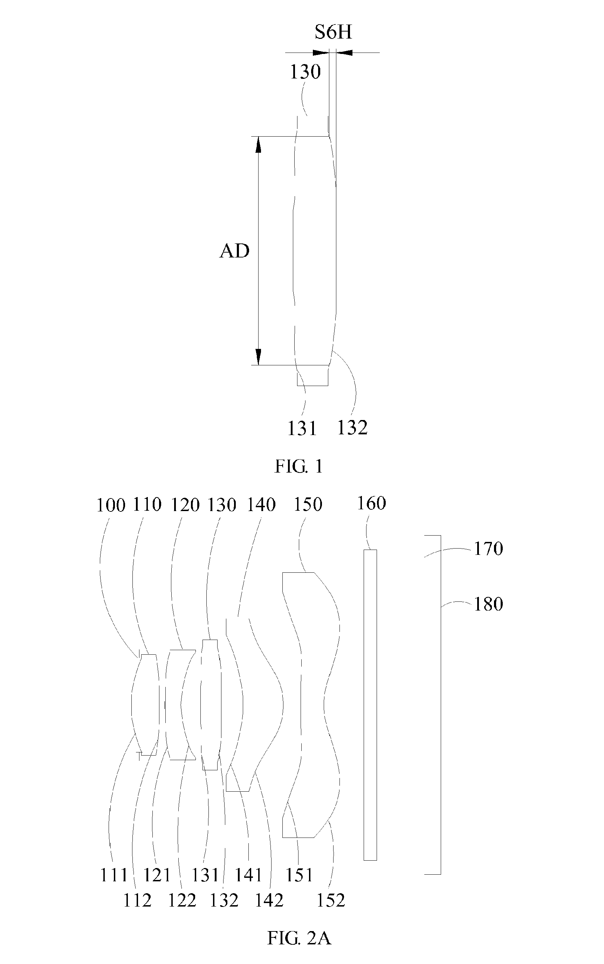

Please refer to FIG. 1 which is a schematic diagram of a parameter S6H of a five-piece lens set for capturing images according to the present invention. As FIG. 1 shows, a third lens element 130 of the five-lens set for capturing images has an object-side surface 131 and an image-side surface, and the max height difference centered by the optical axis and smaller than a diameter range of the aperture stop AD near the image-side surface 132 of the third lens element 130 is S6H. The application of S6H will be described in the following embodiments. Therefore, FIG. 1 is used to explain herein.

Please refer to FIG. 2A which is a schematic diagram of the first embodiment of a five-piece lens set for capturing images according to the present invention. As FIG. 2A shows, the present disclosure includes a five-piece lens set for capturing images including an aperture stop; a five-piece optical lens for capturing images, in order from an object side to an image side, the optical lens along an optical axis including a first lens element 110, a second lens element 120, a third lens element 130, a fourth lens element 140 and a fifth lens element 150. The first lens element has a convex object-side surface 111 near the optical axis, and at least one of the object-side 111 and the image-side 112 surfaces of the first lens element is aspheric; the second lens element has a concave image-side surface 122 near the optical axis, and at least one of the object-side 121 and the image-side 122 surfaces of the second lens element is aspheric; the third lens element 130 with positive refractive power has a convex object-side surface 131 near the optical axis, both the object-side 131 and the image-side 132 surfaces of the third lens element are aspheric, the fourth lens element has a concave object-side surface 141 and a convex image-side surface 142 near the optical axis, and at least one of the object-side 141 and the image-side 142 surfaces of the fourth lens element is aspheric; both the object-side 151 and the image-side 152 surfaces of the fifth lens element near the optical surface are aspheric.

The five-piece lens set for capturing images further includes an aperture stop 100 and an IR filter 160. The aperture stop 100 which is disposed between the object and the first lens element 110 is a front stop. The IR filter 160 is disposed between the fifth lens element 150 and an image-plane 170, and the IR filter 160 is usually made of plate optical materials which does not affect the focal length of the five-piece lens set for capturing images of the present disclosure.

The five-piece lens set for capturing images of the present disclosure further includes an image sensor 180 disposed on the image-plane 170 for imaging an object to be imaged. The first 110, second 120, third 130, fourth 140 and fifth 150 lens elements include a plastic material or a glass material, and the aspheric formula is: z=ch²/[1+[1-(k+1)c²h²]^{0.5}]+Ah⁴+Bh⁶+Ch⁸+Dh¹⁰+Eh¹²+Fh¹⁴+Gh¹⁶+Hh¹⁸ + J h²⁰ +···, and z is a position of altitude h along the optical axis of which surface vertex is served as reference positional value; k is a conic coefficient, c is count of curvature radius and A, B, C, D, E, F, G and H are high order aspheric coefficients.

The optical statistic of the first embodiment is shown in Table 1, the all of the object-side and the image-side surfaces of the first 110 to the fifth 150 lens elements are consisted of the aspheric formulas (1), and the aspheric coefficients are shown in Table 2, diameter of the aperture stop 100 is AD, the max height difference centered by the optical axis and smaller than a diameter range of the aperture stop AD near the image-side surface of the third lens element 130 is S6H, a diagonal line length of the image-plane for the max image-forming perspective view of the lens of the five-piece lens set for capturing images is Dg, a focal length of the first lens element is f1, a distance along the optical axis from the object-side surface of the first lens element to the image-side surface of the fifth lens element is FL and a distance along the optical axis from the aperture stop to the image-side surface of the fifth lens element is STL; S6H=0.043mm, S6H/AD=0.026, AD/f1=0.521, AD/Dg=0.287, FL/Dg=0.582 and STL/FL=0.959. A refractive index of the first lens element 110 in spectrum 587.6nm is Nd1<1.56, a refractive index of the second lens element 120 in spectrum 587.6nm is Nd2>1.56 and a refractive index of the third lens element 130 in spectrum 587.6nm is Nd3<1.56; an Abbe number of the first lens element 110 in spectrum 587.6nm is Vd1>33, an Abbe number of the second lens element 120 in spectrum 587.6nm is Vd2<33, an Abbe number of the third lens element 130 in spectrum 587.6nm is Vd3>33, and the image-side 152 and the object-side 151 surfaces of the fifth lens element have one inflection point.

**Table 1 Basic lens element data of the first embodiment**

| Basic lens element data of the first embodiment | | | | | |
|---|---|---|---|---|---|
| Surface# | | Curvature Radius (mm) | Thickness (mm) | Index( Nd) | Abbe# (Vd) |
| Aperture stop | | ∞ | -0.137 | | |
| First lens element | First Surface | 1.837 | 0.485 | 1.535 | 56.07 |
| | Second Surface | -17.349 | 0.095 | | |
| Second lens element | Third Surface | 3.398 | 0.279 | 1.636 | 23.89 |
| | Fourth Surface | 1.516 | 0.336 | | |
| Third lens element | Fifth Surface | 5.414 | 0.367 | 1.535 | 56.07 |
| | Sixth Surface | -19.078 | 0.370 | | |
| Fourth lens element | Seventh Surface | -1.912 | 0.699 | 1.535 | 56.07 |
| | Eighth Surface | -0.875 | 0.296 | | |
| Fifth lens element | Ninth Surface | 10.651 | 0.397 | 1.535 | 56.07 |
| | Tenth Surface | 1.021 | 0.700 | | |
| Filter | Eleventh Surface | ∞ | 0.210 | 1.51 | 64.17 |
| | Twelfth Surface | ∞ | 0.390 | | |

**Table 2 Aspheric coefficients of the first embodiment**

| Surface# | 1 | 2 | 3 | 4 | 5 |
|---|---|---|---|---|---|
| k | -7.85 | 149.17 | -95.15 | -12.24 | -4.56 |
| A | 0.14374139 | -0.18531889 | -0.15347678 | 0.044340708 | -0.10831091 |
| B | -0.1776026 | 0.5118454 | 0.49416684 | 0.13259435 | -0.063169261 |
| C | 0.1951836 | -0.8261672 | -0.55907177 | -0.051966339 | 0.14038151 |
| D | -0.30242594 | 0.64142832 | 0.15807463 | -0.20855047 | 0.009837186 |
| E | 0.46895704 | -0.19133839 | 0.16721273 | 0.31778866 | -0.047687291 |
| F | -0.52795153 | -0.1004897 | -0.062441037 | -0.15110271 | 0 |
| G | 0.15862144 | 0.080263615 | -0.022753732 | 0.017462641 | 0.007134312 |
| H | 0.075957841 | 0 | 0 | 0 | 0 |
| J | 0 | 0 | 0 | 0 | 0 |

| Surface# | 6 | 7 | 8 | 9 | 10 |
|---|---|---|---|---|---|
| k | -187.19 | 1.24 | -3.08 | -38.55 | -6.23 |
| A | -0.028958899 | 0.10404088 | -0.049949582 | -0.054551503 | -0.069593436 |
| B | -0.082303725 | 0.053783534 | 0.069873197 | -0.015501292 | 0.021870616 |
| C | 0.016599641 | -0.19762222 | -0.07859177 | 0.010075351 | -0.007763691 |
| D | 0.085621124 | 0.27546848 | 0.068199286 | -0.000926269 | 0.001784401 |
| E | -0.038153047 | -0.15470445 | -0.023882485 | -0.000119137 | -0.000231457 |
| F | 0 | 0.033391856 | 0.002273734 | 1.45E-05 | 1.30E-05 |
| G | 3.13E-05 | 0.000387943 | 0.000130719 | 3.18E-07 | -2.16E-08 |
| H | 0 | 0 | 0 | 0 | 0 |
| J | 0 | 0 | 0 | 0 | 0 |

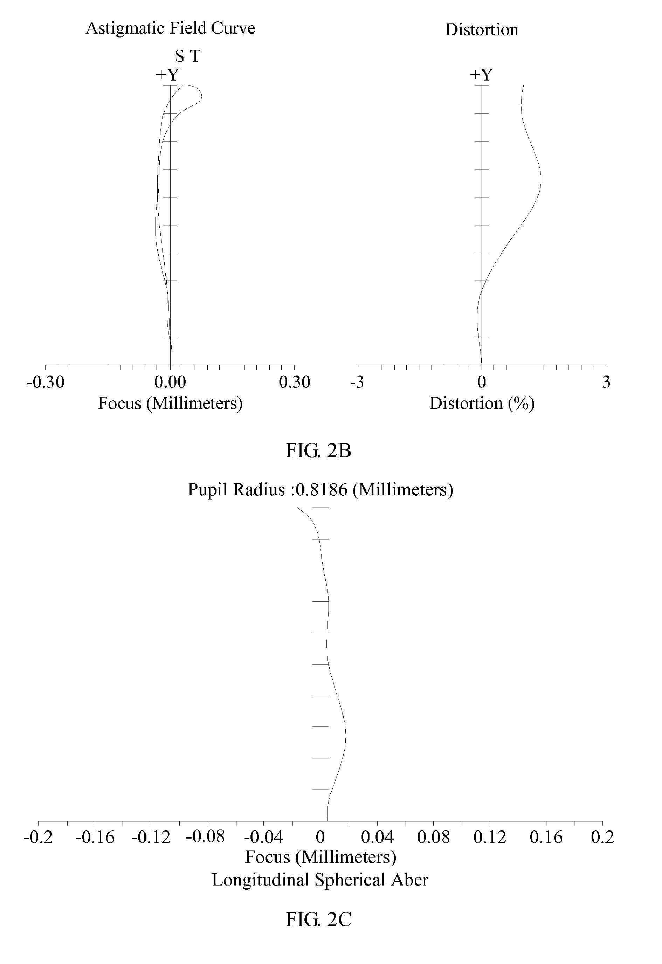

It can be found by the basic lens element data of table 1 along with the curve diagram of aberration of FIGS. 2B and 2C that it has better compensation effect upon the field curvature, distortion and longitudinal aberration by the embodiment of the five-piece lens set for capturing images according to the present disclosure.

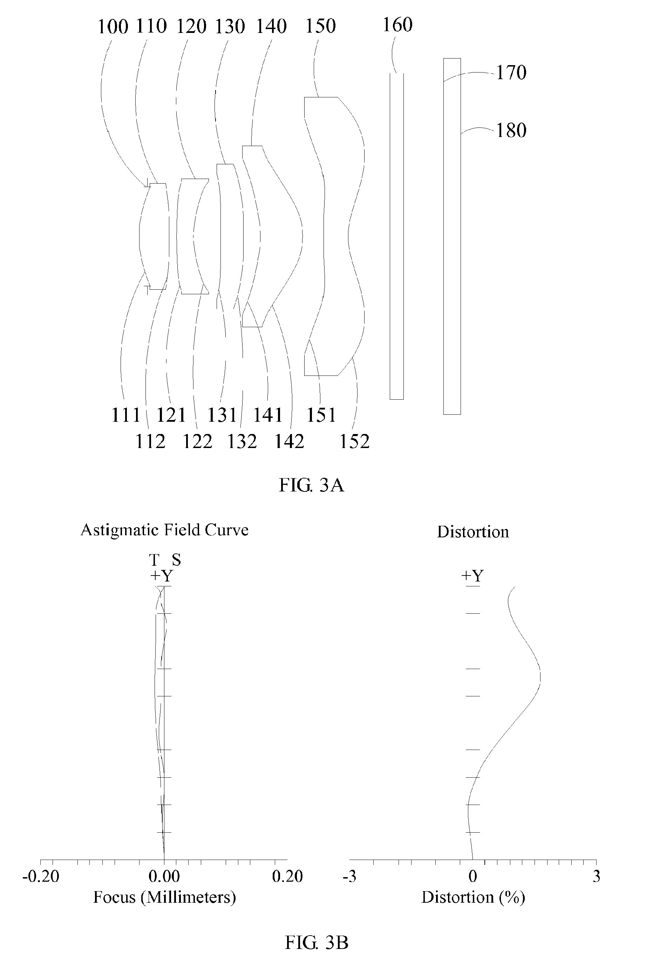

Please refer to FIG. 3A which is a schematic diagram of the second embodiment of a five-piece lens set for capturing images according to the present invention. As shown in FIG. 3A, the lens structure of the second embodiment is akin to that of the first embodiment, but the difference is as shown in the optical statistic of Table 3, the all of the object-side and the image-side surfaces of the first 110 to the fifth 150 lens elements are consisted of the aspheric formulas (1), and the aspheric coefficients are shown in Table 4. The definitions of AD, S6H, Dg, f1, FL, and STL are akin to the ones of the first embodiment, and they are satisfied with the following conditions. S6H=0.049mm, S6H/AD=0.037, AD/f1=0.502, AD/Dg=0.280, FL/Dg=0.598 and STL/FL=0.950. A refractive index of the first lens element 110 in spectrum 587.6nm is Nd1<1.56, a refractive index of the second lens element 120 in spectrum 587.6nm is Nd2>1.56 and a refractive index of the third lens element 130 in spectrum 587.6nm is Nd3<1.56; an Abbe number of the first lens element 110 in spectrum 587.6nm is Vd1>33, an Abbe number of the second lens element 120 in spectrum 587.6nm is Vd2<33, an Abbe number of the third lens element 130 in spectrum 587.6nm is Vd3>33, and the image-side surface 152 of the fifth lens element and the object-side 131 surface of the third lens element have one inflection point.

**Table 3 Basic lens element data of the second embodiment**

| Basic lens element data of the second embodiment | | | | | |
|---|---|---|---|---|---|
| Surface# | | Curvature Radius (mm) | Thickness (mm) | Index( Nd) | Abbe# (Vd) |
| Aperture stop | | ∞ | -0.142 | | |
| First lens element | First Surface | 1.473 | 0.450 | 1.535 | 56.07 |
| | Second Surface | -41.030 | 0.062 | | |
| Second lens element | Third Surface | 3.250 | 0.250 | 1.650 | 21.00 |
| | Fourth Surface | 1.522 | 0.358 | | |
| Third lens element | Fifth Surface | 11.708 | 0.311 | 1.535 | 56.07 |
| | Sixth Surface | -9.369 | 0.257 | | |
| Fourth lens element | Seventh Surface | -1.710 | 0.543 | 1.535 | 56.07 |
| | Eighth Surface | -0.735 | 0.338 | | |
| Fifth lens element | Ninth Surface | -62.270 | 0.275 | 1.535 | 56.07 |
| | Tenth Surface | 0.927 | 0.583 | | |
| Filter | Eleventh Surface | ∞ | 0.175 | 1.517 | 64.17 |
| | Twelfth Surface | ∞ | 0.215 | | |

**Table 4 Aspheric coefficients of the second embodiment**

| Surface# | 1 | 2 | 3 | 4 | 5 |
|---|---|---|---|---|---|
| k | -7.38 | 52.79 | -77.55 | -9.46 | -13.87 |
| A | 0.26250302 | -0.32817205 | -0.21505155 | 0.040157238 | -0.18718804 |
| B | -0.3888368 | 1.3051284 | 1.0777481 | 0.36395646 | -0.17797126 |
| C | 0.70069021 | -3.0744122 | -1.9477865 | -0.11972445 | 0.40249498 |
| D | -1.7144348 | 3.4260646 | 1.3857703 | -1.179297 | 0.12478712 |
| E | 3.3052985 | -0.67035728 | 0.90063768 | 2.4685099 | -0.34166508 |
| F | -4.9113788 | -1.3142059 | -1.4029095 | -1.5275977 | 0 |
| G | 4.8720861 | 0 | 0 | 0 | 0 |
| H | -2.4634313 | 0 | 0 | 0 | 0 |
| J | 0 | 0 | 0 | 0 | 0 |

| Surface | 6 | 7 | 8 | 9 | 10 |
|---|---|---|---|---|---|
| k | -82.51 | 1.32 | -2.89 | -3.75 | -6.74 |
| A | -0.087829128 | 0.12312277 | -0.11417754 | -0.067256566 | -0.1109611 |
| B | -0.20124637 | 0.12190524 | 0.17764531 | -0.049380837 | 0.052020065 |
| C | 0.082354009 | -0.68402591 | -0.2896095 | 0.036021745 | -0.027684166 |
| D | 0.43986801 | 1.4472619 | 0.35204551 | -0.004301562 | 0.009112836 |
| E | -0.32808341 | -1.1553999 | -0.16862033 | -0.000864639 | -0.001662492 |
| F | 0 | 0.33607526 | 0.024635608 | 0.000162001 | 0.000129762 |
| G | 0 | 0 | 0 | 0 | 0 |
| H | 0 | 0 | 0 | 0 | 0 |
| J | 0 | 0 | 0 | 0 | 0 |

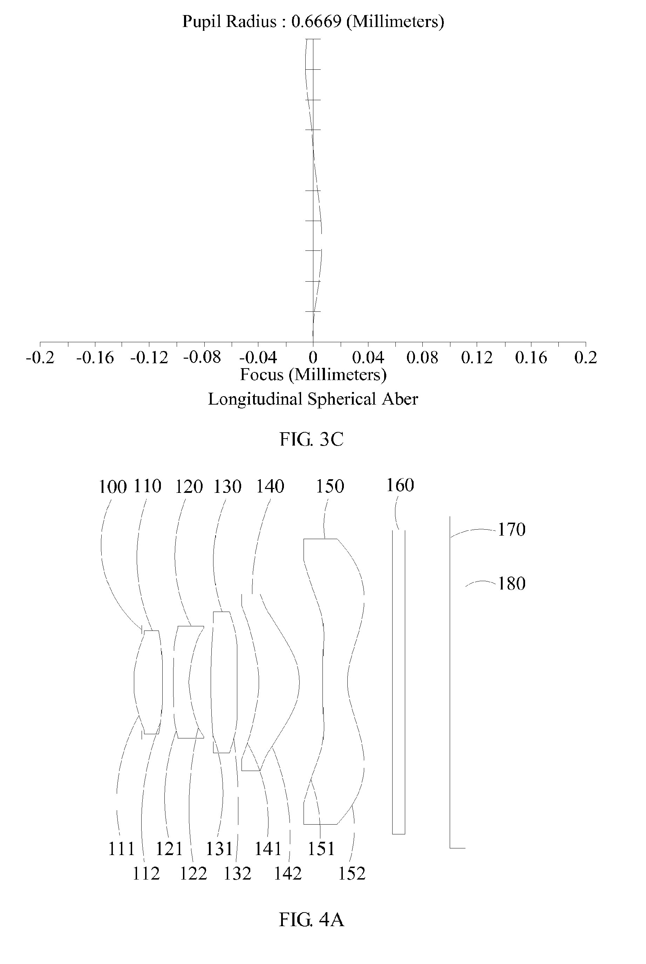

It can be found from the basic lens element data of table 3 along with the curve diagram of aberration of FIGS. 3B and 3C that it has better compensation effect upon the field curvature, distortion and longitudinal aberration by the embodiment of the five-piece lens set for capturing images according to the present disclosure.

Please refer to FIG. 4A which is a schematic diagram of the third embodiment of a five-piece lens set for capturing images according to the present invention. As FIG. 4A shows, the lens structure of the third embodiment is akin to that of the preceding embodiment, but the difference is as shown in the optical statistic of Table 5, the all of the object-side and the image-side surfaces of the first 110 to the fifth 150 lens elements are consisted of the aspheric formulas (1), and the aspheric coefficients are shown in Table 6. The definitions of AD, S6H, Dg, f1, FL, and STL are akin to the ones of the first embodiment, and they are satisfied with the following conditions. S6H=0.039mm, S6H/AD=0.027, AD/f1=0.53, AD/Dg=0.312, FL/Dg=0.650 and STL/FL=0.966. A refractive index of the first lens element 110 in spectrum 587.6nm is Nd1<1.56, a refractive index of the second lens element 120 in spectrum 587.6nm is Nd2>1.56 and a refractive index of the third lens element 130 in spectrum 587.6nm is Nd3<1.56; an Abbe number of the first lens element 110 in spectrum 587.6nm is Vd1>33, an Abbe number of the second lens element 120 in spectrum 587.6nm is Vd2<33, an Abbe number of the third lens element 130 in spectrum 587.6nm is Vd3>33, and the image-side 152 and the object-side 151 surfaces of the fifth lens element have one inflection point.

**Table 5 Basic lens element data of the third embodiment**

| Basic lens element data of the third embodiment | | | | | |
|---|---|---|---|---|---|
| Surface# | | Curvature Radius (mm) | Thickness (mm) | Index( Nd) | Abbe# (Vd) |
| Aperture stop | | ∞ | -0.101 | | |
| First lens element | First Surface | 1.609 | 0.474 | 1.535 | 56.07 |
| | Second Surface | -14.296 | 0.088 | | |
| Second lens element | Third Surface | 3.107 | 0.257 | 1.640 | 23.27 |
| | Fourth Surface | 1.341 | 0.281 | | |
| Third lens element | Fifth Surface | 4.798 | 0.358 | 1.535 | 56.07 |
| | Sixth Surface | -18.369 | 0.303 | | |
| Fourth lens element | Seventh Surface | -1.634 | 0.586 | 1.535 | 56.07 |
| | Eighth Surface | -0.778 | 0.249 | | |
| Fifth lens element | Ninth Surface | 9.541 | 0.393 | 1.535 | 56.07 |
| | Tenth Surface | 0.940 | 0.608 | | |
| Filter | Eleventh Surface | ∞ | 0.210 | 1.517 | 64.17 |
| | Twelfth Surface | ∞ | 0.298 | | |

**Table 6 Aspheric coefficients of the third embodiment**

| Surface# | 1 | 2 | 3 | 4 | 5 |
|---|---|---|---|---|---|
| k | -8.32 | 40.28 | -96.47 | -11.98 | -11.92 |
| A | 0.22552567 | -0.2782091 | -0.23305782 | 0.049472374 | -0.17140335 |
| B | -0.34393455 | 1.0709041 | 0.99467025 | 0.25828329 | -0.13036231 |
| C | 0.58133608 | -2.291985 | -1.5472268 | -0.11360332 | 0.38639975 |
| D | -1.2794463 | 2.317313 | 0.58145938 | -0.7238809 | 0.05069724 |
| E | 2.5219537 | -0.86893463 | 0.82521809 | 1.4853474 | -0.22394676 |
| F | -3.3877834 | -0.39979436 | -0.30295431 | -0.96670008 | 0 |
| G | 1.3765329 | 0.47162106 | -0.33235763 | 0.13059052 | 0.0605968 |
| H | 0.80934573 | 0 | 0 | 0 | 0 |
| J | 0 | 0 | 0 | 0 | 0 |

| Surface# | 6 | 7 | 8 | 9 | 10 |
|---|---|---|---|---|---|
| k | -127.58 | 1.32 | -2.96 | -72.96 | -6.36 |
| A | -0.042268458 | 0.15894025 | -0.083725662 | -0.08002642 | -0.10313857 |
| B | -0.17063595 | 0.098132715 | 0.13571757 | -0.028391651 | 0.043871057 |
| C | 0.037868971 | -0.54276529 | -0.21405144 | 0.026807497 | -0.021041387 |
| D | 0.29307498 | 0.9818792 | 0.2437365 | -0.003581466 | 0.006398132 |
| E | -0.18512348 | -0.72896905 | -0.11426593 | -0.000563046 | -0.001092252 |
| F | 0 | 0.21842909 | 0.014316014 | 0.00012959 | 8.75E-05 |
| G | 0.016367346 | 0.000966802 | 0.00147154 | -3.46E-06 | -8.85E-07 |
| H | 0 | 0 | 0 | 0 | 0 |
| J | 0 | 0 | 0 | 0 | 0 |

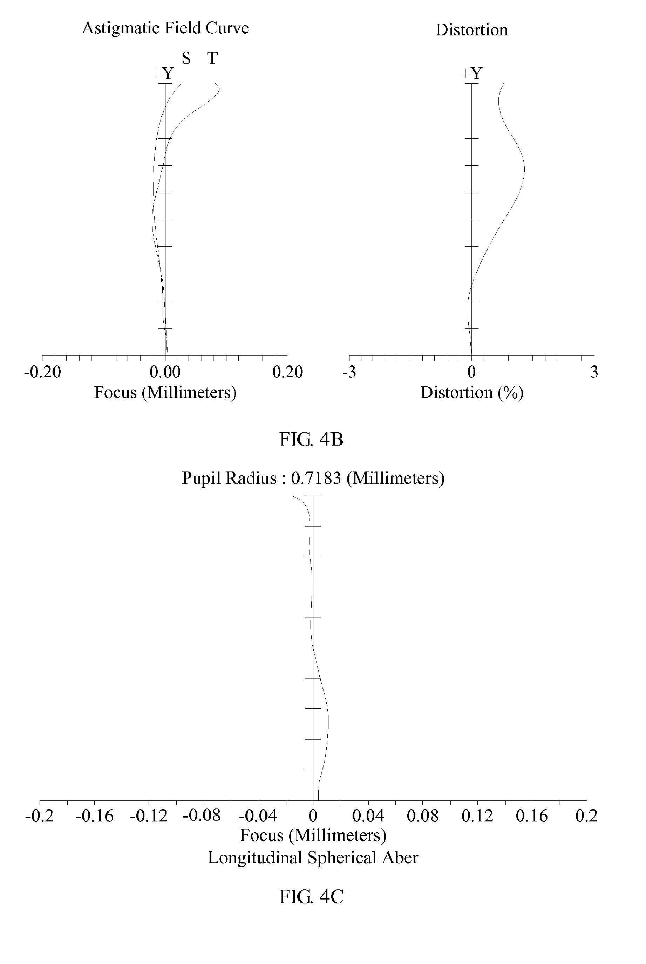

It can be found from the basic lens element data of table 5 along with the curve diagram of aberration of FIGS. 4B and 4C that it has better compensation effect upon the field curvature, distortion and longitudinal aberration by the embodiment of the five-piece lens set for capturing images according to the present disclosure.

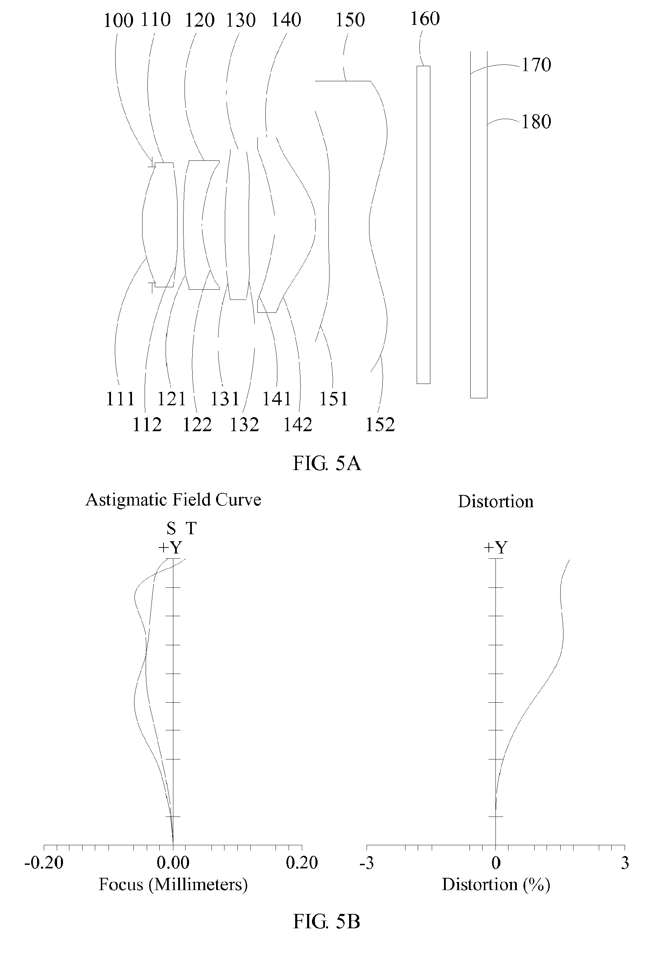

Please refer to FIG. 5A which is a schematic diagram of the fourth embodiment of a five-piece lens set for capturing images according to the present invention. As FIG. 5A shows, the lens structure of the fourth embodiment is akin to that of the preceding embodiment, but the difference is as shown in the optical statistic of Table 7, the all of the object-side and the image-side surfaces of the first 110 to the fifth 150 lens elements are consisted of the aspheric formulas (1), and the aspheric coefficients are shown in Table 8. The definitions of AD, S6H, Dg, f1, FL, and STL are akin to the ones of the first embodiment, and they are satisfied with the following conditions. S6H=0.011mm, S6H/AD=0.005, AD/f1=0.537, AD/Dg=0.316, FL/Dg=0.665 and STL/FL=0.969. A refractive index of the first lens element 110 in spectrum 587.6nm is Nd1<1.56, a refractive index of the second lens element 120 in spectrum 587.6nm is Nd2>1.56 and a refractive index of the third lens element 130 in spectrum 587.6nm is Nd3<1.56; an Abbe number of the first lens element 110 in spectrum 587.6nm is Vd1>33, an Abbe number of the second lens element 120 in spectrum 587.6nm is Vd2<33, an Abbe number of the third lens element 130 in spectrum 587.6nm is Vd3>33, and the image-side 152 and the object-side 151 surfaces of the fifth lens element have one inflection point.

**Table 7 Basic lens element data of the fourth embodiment**

| Basic lens element data of the fourth embodiment | | | | | |
|---|---|---|---|---|---|
| Surface# | | Curvature Radius (mm) | Thickness (mm) | Index( Nd) | Abbe# (Vd) |
| Aperture stop | | ∞ | -0.129 | | |
| First lens element | First Surface | 2.300 | 0.704 | 1.535 | 56.07 |
| | Second Surface | -14.027 | 0.081 | | |
| Second lens element | Third Surface | 4.590 | 0.372 | 1.640 | 23.27 |
| | Fourth Surface | 1.869 | 0.404 | | |
| Third lens element | Fifth Surface | 4.204 | 0.438 | 1.535 | 56.07 |
| | Sixth Surface | 12.585 | 0.534 | | |
| Fourth lens element | Seventh Surface | -2.350 | 0.660 | 1.535 | 56.07 |
| | Eighth Surface | -1.168 | 0.314 | | |
| Fifth lens element | Ninth Surface | 9.024 | 0.748 | 1.535 | 56.07 |
| | Tenth Surface | 1.421 | 0.868 | | |
| Filter | Eleventh Surface | ∞ | 0.300 | 1.517 | 64.17 |
| | Twelfth Surface | ∞ | 0.272 | | |

**Table 8 Aspheric coefficients of the fourth embodiment**

| Surface# | 1 | 2 | 3 | 4 | 5 |
|---|---|---|---|---|---|
| k | -8.00 | 6.41 | -110.91 | -11.67 | -7.40 |
| A | 0.076805837 | -0.093619214 | -0.081880822 | 0.016440818 | -0.058807643 |
| B | -0.059169677 | 0.17741058 | 0.16659157 | 0.043577461 | -0.022314382 |
| C | 0.04657519 | -0.19391238 | -0.12739471 | -0.008835693 | 0.030850251 |
| D | -0.052235258 | 0.091775551 | 0.023655409 | -0.028884413 | 0.001365556 |
| E | 0.049548948 | -0.015228248 | 0.016691594 | 0.029670832 | -0.004816883 |
| F | -0.033100826 | -0.00217054 | -0.002591262 | -0.009266047 | 0 |
| G | 0.005536041 | 0.000853944 | -0.001878611 | 0.000404704 | 0.00033606 |
| H | 0.002660312 | 0 | 0 | 0 | 0 |
| J | 0 | 0 | 0 | 0 | 0 |

| Surface# | 6 | 7 | 8 | 9 | 10 |
|---|---|---|---|---|---|
| k | -89.79 | 1.30 | -2.79 | -97.75 | -6.07 |
| A | -0.01356982 | 0.058170802 | -0.029778621 | -0.027139803 | -0.032857888 |
| B | -0.028225572 | 0.016572623 | 0.022835987 | -0.004449382 | 0.007175546 |
| C | 0.003162035 | -0.045078434 | -0.01737032 | 0.002215151 | -0.001734055 |
| D | 0.011669659 | 0.039425041 | 0.009957244 | -0.000150291 | 0.000259943 |
| E | -0.003819923 | -0.014440201 | -0.002239909 | -1.19E-05 | -2.15E-05 |
| F | 0 | 0.002129601 | 0.000136955 | 1.27E-06 | 8.49E-07 |
| G | 9.46E-06 | 1.48E-05 | 3.75E-06 | -7.97E-09 | -9.80E-09 |
| H | 0 | 0 | 0 | 0 | 0 |
| J | 0 | 0 | 0 | 0 | 0 |

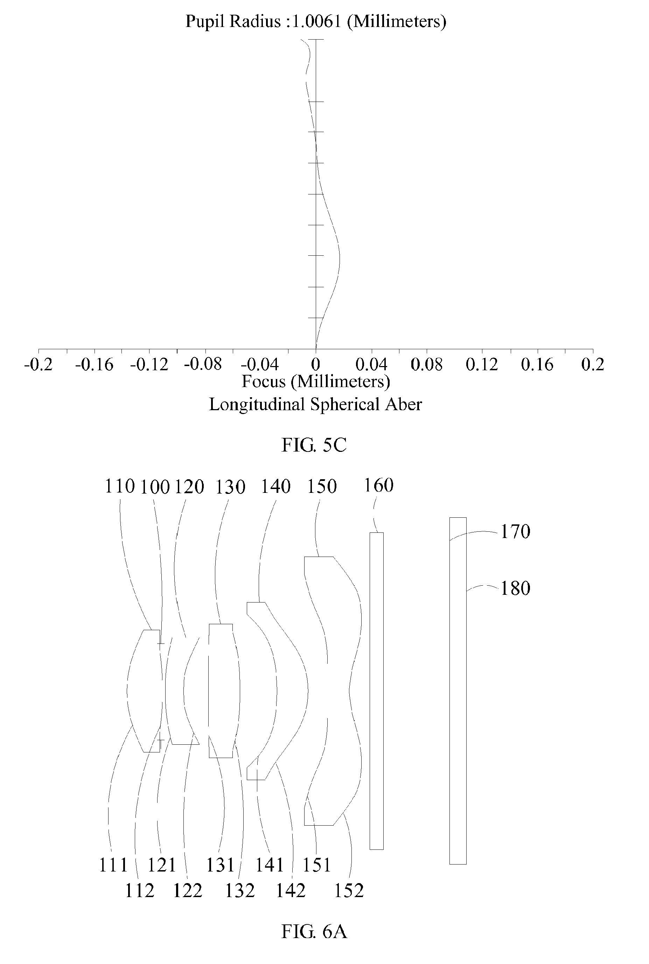

It can be found from the basic lens element data of table 7 along with the curve diagram of aberration of FIGS. 5B and 5C that it has better compensation effect upon the field curvature, distortion and longitudinal aberration by the embodiment of the five-piece lens set for capturing images according to the present disclosure.

Please refer to FIG. 6A which is a schematic diagram of the fifth embodiment of a five-piece lens set for capturing images according to the present invention. As FIG. 6A shows, the lens structure of the fifth embodiment is akin to that of the preceding embodiment, but the first difference is that the aperture stop 100 of the embodiment which is arranged between the first lens element 110 and the second lens element 120 is a middle stop, and the second difference is as shown in the optical statistic of Table 9, the all of the object-side and the image-side surfaces of the first 110 to the fifth 150 lens elements are consisted of the aspheric formulas (1), and the aspheric coefficients are shown in Table 10. The definitions of AD, S6H, Dg, f1, FL, and STL are akin to the ones of the first embodiment, and they are satisfied with the following conditions. S6H=0.057mm, S6H/AD=0.041, AD/fl=0.624, AD/Dg=0.291, FL/Dg=0.654 and STL/FL=0.846. A refractive index of the first lens element 110 in spectrum 587.6nm is Nd1<1.56, a refractive index of the second lens element 120 in spectrum 587.6nm is Nd2>1.56 and a refractive index of the third lens element 130 in spectrum 587.6nm is Nd3<1.56; an Abbe number of the first lens element 110 in spectrum 587.6nm is Vd1>33, an Abbe number of the second lens element 120 in spectrum 587.6nm is Vd2<33, an Abbe number of the third lens element 130 in spectrum 587.6nm is Vd3>33, and the image-side 152 and the object-side 151 surfaces of the fifth lens element have one inflection point.

**Table 9 Basic lens element data of the fifth embodiment**

| Basic lens element data of the fifth embodiment | | | | | |
|---|---|---|---|---|---|
| Surface# | | Curvature Radius (mm) | Thickness (mm) | Index( Nd) | Abbe# (Vd) |
| First lens element | First Surface | 1.754 | 0.498 | 1.535 | 56.07 |
| | Second Surface | -3.322 | -0.018 | | |
| Aperture stop | | ∞ | 0.059 | | |
| Second lens element | Third Surface | 2.844 | 0.250 | 1.636 | 23.89 |
| | Fourth Surface | 1.067 | 0.348 | | |
| Third lens element | Fifth Surface | 13.142 | 0.444 | 1.535 | 56.07 |
| | Sixth Surface | -6.076 | 0.524 | | |
| Fourth lens element | Seventh Surface | -2.021 | 0.433 | 1.535 | 56.07 |
| | Eighth Surface | -0.913 | 0.263 | | |
| Fifth lens element | Ninth Surface | 4.165 | 0.311 | 1.535 | 56.07 |
| | Tenth Surface | 0.872 | 0.300 | | |
| Filter | Eleventh Surface | ∞ | 0.175 | 1.517 | 64.17 |
| | Twelfth Surface | ∞ | 0.583 | | |

**Table 10 Aspheric coefficients of the fifth embodiment**

| Surface# | 1 | 2 | 3 | 4 | 5 |
|---|---|---|---|---|---|
| k | -0.34 | 5.62 | -52.77 | -5.49 | -199.12 |
| A | -0.007430245 | 0.25008778 | 0.11732844 | 0.023290144 | -0.082263595 |
| B | -0.00881217 | -0.42350224 | -0.17095878 | 0.26583617 | -0.052815997 |
| C | -0.067240305 | 1.355927 | 0.92901087 | -0.31945992 | 0.38589782 |
| D | 0.2520181 | -3.3557415 | -2.2400981 | 0.04750541 | -0.62672955 |
| E | -0.30585652 | 5.1791801 | 2.4832599 | 0.476305 | 0.28487366 |
| F | 0.18571364 | -4.0301883 | -0.72821823 | -0.54464478 | 1.1026877 |
| G | -0.031255787 | 1.1441501 | -0.54624962 | -0.049750046 | -1.0929922 |
| H | 0 | 0 | 0 | 0 | 0 |
| J | 0 | 0 | 0 | 0 | 0 |

| Surface# | 6 | 7 | 8 | 9 | 10 |
|---|---|---|---|---|---|
| k | 35.11 | -0.65 | -0.68 | -217.12 | -6.69 |
| A | -0.034350714 | 0.083791175 | 0.38628023 | -0.22778375 | -0.19476963 |
| B | -0.078185964 | -0.27208058 | -0.43425873 | 0.10147794 | 0.12479386 |
| C | 0.12311838 | 0.12603025 | 0.28707817 | -0.00910749 | -0.062859065 |
| D | -0.10304577 | 0.028796181 | -0.035911957 | -0.003948502 | 0.018327606 |
| E | 0.22829539 | 0.014350152 | -0.032076297 | 8.53E-05 | -0.002270074 |
| F | -0.43213984 | -0.13403237 | 0.013959533 | 0.000553729 | -0.000120573 |
| G | 0.40045829 | 0.077359554 | -0.002118428 | -0.000110326 | 2.22E-05 |
| H | 0.080464207 | 0 | 0 | -1.76E-06 | 1.29E-05 |
| J | -0.13821415 | 0 | 0 | 1.22E-06 | -1.98E-06 |

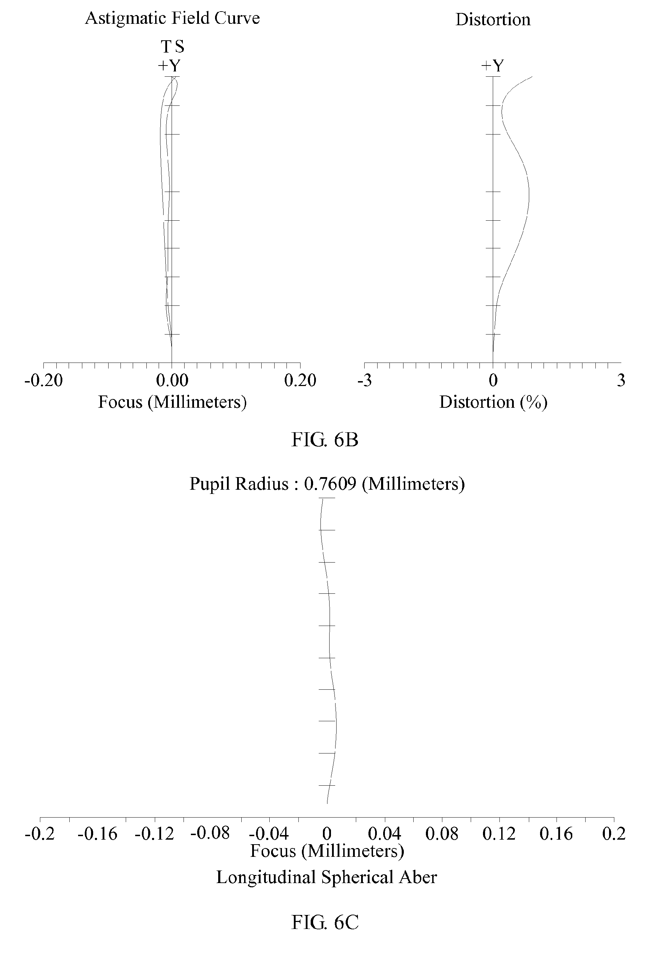

It can be found from the basic lens element data of table 9 along with the curve diagram of aberration of FIGS. 6B and 6C that it has better compensation effect upon the field curvature, distortion and longitudinal aberration by the embodiment of the five-piece lens set for capturing images according to the present disclosure.

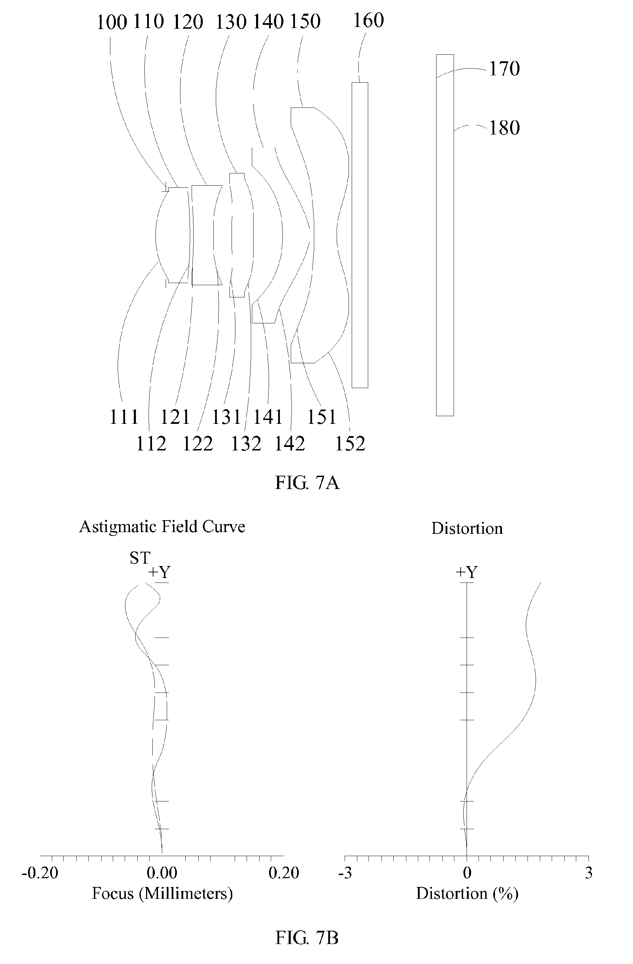

Please refer to FIG. 7A which is a schematic diagram of the sixth embodiment of a five-piece lens set for capturing images according to the present invention. As FIG. 7A shows, the lens structure of the sixth embodiment is akin to that of the fourth embodiment, but the difference is as shown in the optical statistic of Table 11, the all of the object-side and the image-side surfaces of the first 110 to the fifth 150 lens elements are consisted of the aspheric formulas (1), and the aspheric coefficients are shown in Table 12. The definitions of AD, S6H, Dg, f1, FL, and STL are akin to the ones of the first embodiment, and they are satisfied with the following conditions. S6H=0.092mm, S6H/AD=0.054, AD/f1=0.630, AD/Dg=0.258, FL/Dg=0.518 and STL/FL=0.932. A refractive index of the first lens element 110 in spectrum 587.6nm is Nd1<1.56, a refractive index of the second lens element 120 in spectrum 587.6nm is Nd2>1.56 and a refractive index of the third lens element 130 in spectrum 587.6nm is Nd3<1.56; an Abbe number of the first lens element 110 in spectrum 587.6nm is Vd1>33, an Abbe number of the second lens element 120 in spectrum 587.6nm is Vd2<33, an Abbe number of the third lens element 130 in spectrum 587.6nm is Vd3>33, and the image-side surface 152 of the fifth lens element and the object-side 131 surfaces of the third lens element have one inflection point.

**Table 11 Basic lens element data of the sixth embodiment**

| Basic lens element data of the sixth embodiment | | | | | |
|---|---|---|---|---|---|
| Surface# | | Curvature Radius (mm) | Thickness (mm) | Index( Nd) | Abbe# (Vd) |
| Aperture stop | | ∞ | -0.232 | | |
| First lens | First Surface | 1.599 | 0.639 | 1.535 | 56.07 |
| element | Second Surface | -12.732 | 0.070 | | |
| Second lens element | Third Surface | -12.184 | 0.377 | 1.636 | 23.89 |
| | Fourth Surface | 3.408 | 0.350 | | |
| Third lens element | Fifth Surface | 12.076 | 0.416 | 1.535 | 56.07 |
| | Sixth Surface | -11.108 | 0.538 | | |
| Fourth lens element | Seventh Surface | -2.697 | 0.515 | 1.535 | 56.07 |
| | Eighth Surface | -0.761 | 0.081 | | |
| Fifth lens element | Ninth Surface | -3.453 | 0.424 | 1.535 | 56.07 |
| | Tenth Surface | 1.010 | 0.294 | | |
| Filter | Eleventh Surface | ∞ | 0.300 | 1.517 | 64.17 |
| | Twelfth Surface | ∞ | 0.803 | | |

**Table 12 Aspheric coefficients of the sixth embodiment**

| Surface# | 1 | 2 | 3 | 4 | 5 |
|---|---|---|---|---|---|
| k | -1.60 | -221.94 | -63.53 | -34.17 | 71.60 |
| A | 0.043221794 | -0.018007681 | -0.019023752 | 0.10707912 | -0.13530536 |
| B | 0.006154857 | 0.044328442 | 0.11427893 | -0.062220062 | 0.14694553 |
| C | 0.003553837 | -0.1099834 | -0.24629348 | 0.096947317 | -0.25741959 |
| D | -0.023977267 | 0.015319231 | 0.18094814 | -0.091104369 | 0.32752585 |
| E | 0 | 0.024979697 | 0.048223914 | 0.060111933 | -0.3538253 |
| F | 0 | 0.082282503 | -0.058178228 | 0 | 0.29542476 |
| G | 0 | -0.070733738 | 0.002808833 | 0 | -0.11190977 |
| H | 0 | 0 | 0 | 0 | 0 |
| J | 0 | 0 | 0 | 0 | 0 |

| Surface# | 6 | 7 | 8 | 9 | 10 |
|---|---|---|---|---|---|
| k | 79.60 | -54.58 | -4.73 | -29.31 | -9.94 |
| A | -0.16013223 | -0.44316505 | -0.12634307 | 0.15036433 | -0.021701812 |
| B | 0.14783139 | 0.51167202 | 0.1514355 | -0.24218472 | -0.026170254 |
| C | -0.14548064 | -0.37253568 | -0.070144078 | 0.15956069 | 0.017969625 |
| D | 0.069692075 | 0.13583734 | 0.013777498 | -0.058262768 | -0.006196942 |
| E | -0.025067552 | -0.027332463 | -0.000649893 | 0.012247806 | 0.001216597 |
| F | 0.04056653 | 0.005322222 | 4.39E-06 | -0.001380788 | -0.000129989 |
| G | -0.016074834 | -0.000428172 | -2.39E-05 | 6.46E-05 | 5.82E-06 |
| H | 0 | 0 | 0 | 0 | 0 |
| J | 0 | 0 | 0 | 0 | 0 |

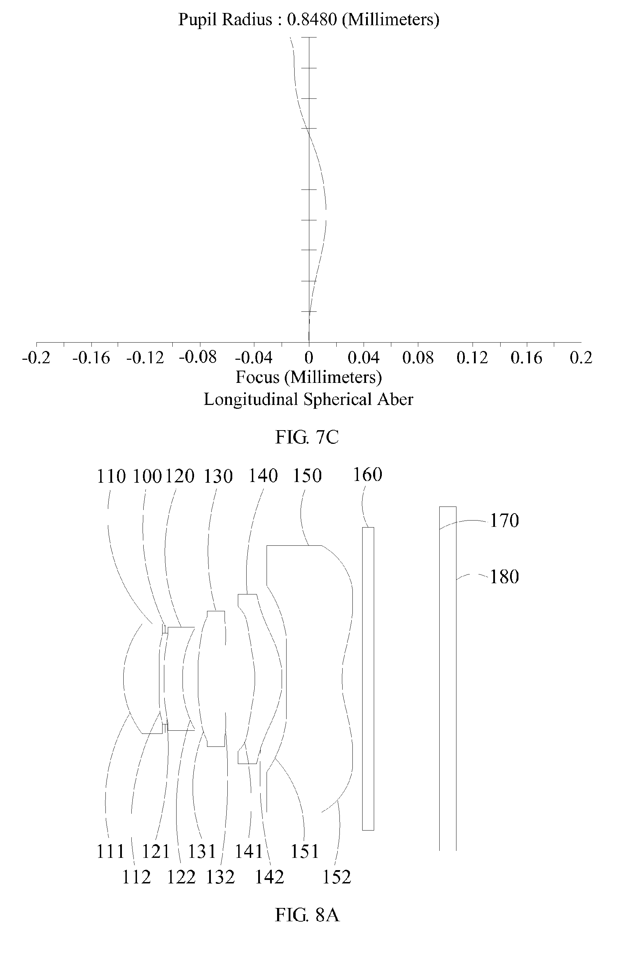

It can be found from the basic lens element data of table 11 along with the curve diagram of aberration of FIGS. 7B and 7C that it has better compensation effect upon the field curvature, distortion and longitudinal aberration by the embodiment of the five-piece lens set for capturing images according to the present disclosure.

Please refer to FIG. 8A which is a schematic diagram of the seventh embodiment of a five-piece lens set for capturing images according to the present invention. As FIG. 8A shows, the lens structure of the seventh embodiment is akin to that of the fifth embodiment, but the difference is as shown in the optical statistic of Table 13, the all of the object-side and the image-side surfaces of the first 110 to the fifth 150 lens elements are consisted of the aspheric formulas (1), and the aspheric coefficients are shown in Table 14. The definitions of AD, S6H, Dg, f1, FL, and STL are akin to the ones of the first embodiment, and they are satisfied with the following conditions. S6H=0.011mm, S6H/AD=0.009, AD/f1=0.442, AD/Dg=0.264, FL/Dg=0.660 and STL/FL=0.812. A refractive index of the first lens element 110 in spectrum 587.6nm is Nd1<1.56, a refractive index of the second lens element 120 in spectrum 587.6nm is Nd2>1.56 and a refractive index of the third lens element 130 in spectrum 587.6nm is Nd3<1.56; an Abbe number of the first lens element 110 in spectrum 587.6nm is Vd1>33, an Abbe number of the second lens element 120 in spectrum 587.6nm is Vd2<33, an Abbe number of the third lens element 130 in spectrum 587.6nm is Vd3>33, and the image-side 152 and the object-side 151 surfaces of the fifth lens element have one inflection point.

**Table 13 Basic lens element data of the seventh embodiment**

| Basic lens element data of the seventh embodiment | | | | | |
|---|---|---|---|---|---|
| Surface# | | Curvature Radius (mm) | Thickness (mm) | Index( Nd) | Abbe# (Vd) |
| First lens element | First Surface | 1.342 | 0.505 | 1.535 | 56.07 |
| | Second Surface | 8.906 | 0.088 | | |
| Aperture stop | | ∞ | -0.016 | | |
| Second lens element | Third Surface | 3.498 | 0.271 | 1.632 | 23.42 |
| | Fourth Surface | 1.413 | 0.213 | | |
| Third lens element | Fifth Surface | 2.911 | 0.395 | 1.535 | 56.07 |
| | Sixth Surface | 10.772 | 0.427 | | |
| Fourth lens element | Seventh Surface | -1.754 | 0.398 | 1.535 | 56.07 |
| | Eighth Surface | -0.992 | 0.059 | | |
| Fifth lens element | Ninth Surface | 6.538 | 0.801 | 1.535 | 56.07 |
| | Tenth Surface | 1.149 | 0.292 | | |
| Filter | Eleventh Surface | ∞ | 0.175 | 1.517 | 64.17 |
| | Twelfth Surface | ∞ | 0.573 | | |

**Table 14 Aspheric coefficients of the seventh embodiment**

| Surface# | 1 | 2 | 3 | 4 | 5 |
|---|---|---|---|---|---|
| k | 0.09 | -613.90 | 16.29 | -2.87 | 4.32 |
| A | 0.013284132 | 0.44299422 | 0.14856766 | 0.052908684 | -0.028048003 |
| B | 0.11992465 | -1.1208532 | -0.97109856 | 0.074081608 | -0.22053529 |
| C | -0.19135562 | 2.0913727 | 1.665837 | -0.2370658 | 0.46218976 |
| D | 0.25241816 | -1.7214216 | -1.9021112 | 0.09544966 | -0.23193652 |
| E | 0 | 0 | 0 | 0 | 0 |
| F | 0 | 0 | 0 | 0 | 0 |
| G | 0 | 0 | 0 | 0 | 0 |
| H | 0 | 0 | 0 | 0 | 0 |
| J | 0 | 0 | 0 | 0 | 0 |

| Surface# | 6 | 7 | 8 | 9 | 10 |
|---|---|---|---|---|---|
| k | 87.38 | -9.56 | -0.64 | -420.49 | -10.05 |
| A | 0.023564214 | 0.16470913 | 0.2972833 | -0.2209714 | -0.091847043 |
| B | -0.22826643 | -0.15908408 | -0.096120028 | 0.08335156 | 0.02627718 |
| C | 0.02262298 | 0.026845202 | 0.06151812 | -0.017016764 | -0.006614557 |
| D | 0.11940021 | -0.049385236 | -0.017709651 | 0.003096511 | 0.000393014 |
| E | 0 | 0 | 0 | 0 | 0 |
| F | 0 | 0 | 0 | 0 | 0 |
| G | 0 | 0 | 0 | 0 | 0 |
| H | 0 | 0 | 0 | 0 | 0 |
| J | 0 | 0 | 0 | 0 | 0 |

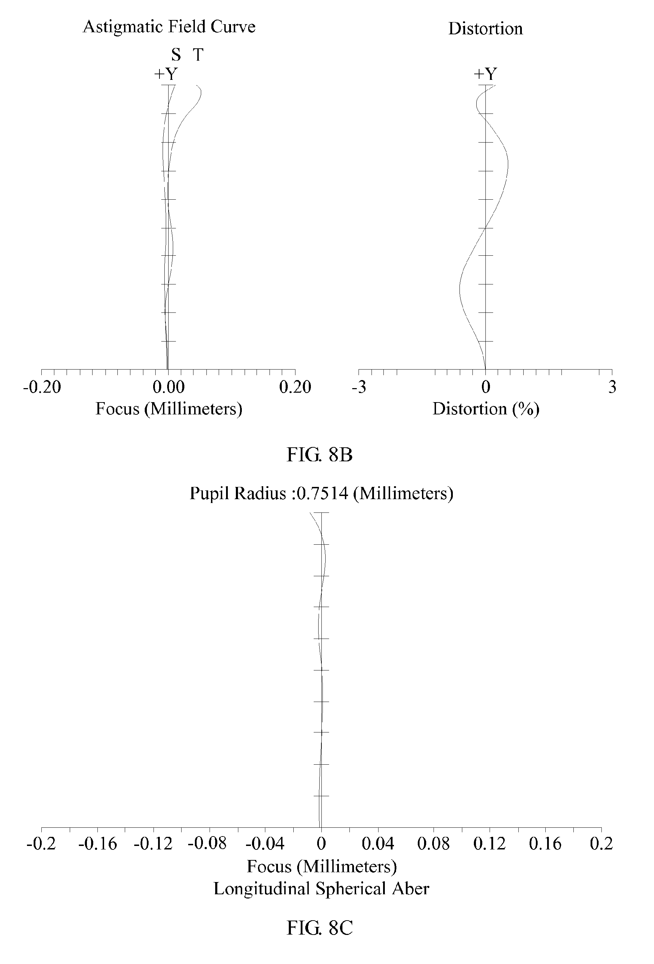

It can be found from the basic lens element data of table 13 along with the curve diagram of aberration of FIGS. 8B and 8C that it has better compensation effect upon the field curvature, distortion and longitudinal aberration by the embodiment of the five-piece lens set for capturing images according to the present disclosure.

While the means of specific embodiments in present invention has been described by reference drawings, numerous modifications and variations could be made thereto by those skilled in the art without departing from the scope and spirit of the invention set forth in the claims. The modifications and variations should in a range limited by the specification of the present invention.

## Claims

1. A five-piece lens set for capturing images, comprising:
an aperture stop (100) ;
a five-piece optical lens for capturing images, in order from an object side to an image side, the optical lens along an optical axis comprising
a first lens element (110) having a convex object-side (111) surface near the optical axis, and at least one of the object-side (111) and the image-side (112) surfaces of the first lens element (110) being aspheric;
a second lens element (120) having a concave image-side surface (122) near the optical axis, and at least one of the object-side (121) and the image-side (122) surfaces of the second lens element (120) being aspheric;
a third lens element (130) with positive refractive power having a convex object-side surface (131) near the optical axis, both the object-side (131) and the image-side (132) surfaces of the third lens element (130) being aspheric, the max height difference centered by the optical axis and smaller than a diameter range of the aperture stop (100) near the image-side surface (132) being S6H, diameter of the aperture stop (100) being AD, and the following relationship being satisfied: S6H/AD<0.1;
a fourth lens element (140) having a concave object-side surface (141) and a convex image-side surface (142) near the optical axis, and at least one of the object-side (141) and the image-side (142) surfaces of the fourth lens element (140) being aspheric;
a fifth lens element (150), both the object-side (151) and the image-side (152) surfaces of the fifth lens element (150) near the optical axis being aspheric; and
an image-plane (170) for imaging an object to be imaged;
wherein at least two of the aspheric surfaces have one inflection point.

2. The five-piece lens set for capturing images of claim 1, wherein the image-plane (170) is positioned on an image sensor (180).

3. The five-piece lens set for capturing images of claim 1, wherein a focal length of the first lens element (110) is f1, and the following relationship is satisfied: 0.2<AD/f1<0.8.

4. The five-piece lens set for capturing images of claim 1, wherein a refractive index of the second lens element (120) in spectrum 587.6nm is Nd2, a refractive index of the third lens element (130) in spectrum 587.6nm is Nd3, an Abbe number of the second lens element (120) in spectrum 587.6nm is Vd2, an Abbe number of the third lens element (130) in spectrum 587.6nm is Vd3, and the following relationship is satisfied: Nd2>1.56, Nd3<1.56, Vd2<33, Vd3>33.

5. A five-piece lens set for capturing images, comprising:
an aperture stop (100) ;
a five-piece optical lens for capturing images, in order from an object side to an image side, the optical lens along an optical axis comprising
a first lens element (110) having a convex object-side surface (111) near the optical axis, and at least one of the object-side (111) and the image-side (112) surfaces of the first lens element (110) being aspheric;
a second lens element (120) having a concave image-side surface (122) near the optical axis, and at least one of the object-side (121) and the image-side (122) surfaces of the second lens element (120) being aspheric;
a third lens element (130) with positive refractive power having a convex object-side surface (131) near the optical axis, both the object-side (131) and the image-side (132) surfaces of the third lens element (130) being aspheric, the max height difference centered by the optical axis and smaller than a diameter range of the aperture stop (100) near the image-side surface (132) being S6H, diameter of the aperture stop (100) being AD, and the following relationship being satisfied: S6H/AD<0.1;
a fourth lens element (140) having a concave object-side surface (141) and a convex image-side surface (142) near the optical axis, and at least one of the object-side (141) and the image-side (142) surfaces of the fourth lens element (140) being aspheric;
a fifth lens element (150), both the object-side (151) and the image-side (152) surfaces of the fifth lens element (150) being aspheric; and
an image-plane (170) for imaging an object to be imaged;
wherein a diagonal line length of the image-plane (170) for the max image-forming perspective view of the lens of the five-piece lens set for capturing images is Dg, and the following relationship is satisfied: 0.2 < AD/Dg < 0.5.

6. The five-piece lens set for capturing images of claim 5, wherein the image-plane (170) is positioned on an image sensor (180).

7. The five-piece lens set for capturing images of claim 5, wherein a refractive index of the second lens element (120) in spectrum 587.6nm is Nd2, a refractive index of the third lens element (130) in spectrum 587.6nm is Nd3, an Abbe number of the second lens element (120) in spectrum 587.6nm is Vd2, an Abbe number of the third lens element (130) in spectrum 587.6nm is Vd3, and the following relationship is satisfied: Nd2>1.56, Nd3<1.56, Vd2<33, Vd3>33.

8. The five-piece lens set for capturing images of claim 5, wherein a distance along the optical axis from the object-side surface (111) of the first lens element (110) to the image-side surface (152) of the fifth lens element (150) is FL, and the following relationship is satisfied: 0.4<FL/Dg<0.8.

9. A five-piece lens set for capturing images, comprising:
an aperture stop (100) ;
a five-piece optical lens for capturing images, in order from an object side to an image side, the optical lens along an optical axis comprising
a first lens element (110) having a convex object-side surface (111) near the optical axis, and at least one of the object-side (111) and the image-side(112) surfaces of the first lens element (110) being aspheric;
a second lens element (120) having a concave image-side surface (121) near the optical axis, and at least one of the object-side (121) and the image-side (122) surfaces of the second lens element (120) being aspheric;
a third lens element (130) with positive refractive power having a convex object-side surface (131) near the optical axis, both the object-side (131) and the image-side (132) surfaces of the third lens element (130) being aspheric, and the max height difference centered by the optical axis and smaller than a diameter range of the aperture stop (100) near the image-side surface (132) being smaller than 0.15mm;
a fourth lens element (140) having a concave object-side surface (141) and a convex image-side surface (142) near the optical axis, and at least one of the object-side (141) and the image-side (142) surfaces of the fourth lens element (140) being aspheric;
a fifth lens element (150), both the object-side (151) and the image-side (152) surfaces of the fifth lens (150) element being aspheric; and
an image-plane (170) for imaging an object to be imaged;
wherein a distance along the optical axis from the object-side surface (111) of the first lens element (110) to the image-side surface (152) of the fifth lens element (150) is FL, a distance along the optical axis from the aperture stop (100) to the image-side surface (152) of the fifth lens element (150) is STL, and the following relationship is satisfied: 0.7<STL/FL<1.1.

10. The five-piece lens set for capturing images of claim 9, wherein the image-plane (170) is positioned on an image sensor (180).

11. The five-piece lens set for capturing images of claim 9, wherein a refractive index of the second lens element (120) in spectrum 587.6nm is Nd2, a refractive index of the first lens element (110) in spectrum 587.6nm is Nd1, an Abbe number of the second lens element (120) in spectrum 587.6nm is Vd2, an Abbe number of the first lens element (110) in spectrum 587.6nm is Vd1, and the following relationship is satisfied: Nd2>1.56, Nd1<1.56, Vd2<33, Vd1>33.

12. The five-piece lens set for capturing images of claim 9, wherein a diagonal line length of the image-plane (170) for the max image-forming perspective view of the lens of the five-piece lens set for capturing images is Dg, and the following relationship is satisfied: 0.4 < FL/Dg < 0.8.
